# EUROPÄISCHE PATENTSCHRIFT

(11) **EP 0 926 275 B1**
(45) Veröffentlichungstag und Bekanntmachung des Hinweises auf die Patenterteilung: **10.09.2003**
(21) Anmeldenummer: 98120212.0
(22) Anmeldetag: 26.10.1998
(51) Int. Cl.: D01H 4/08, D01H 4/38

(54) **Offenend-Spinnvorrichtung zum Herstellen von Z- oder S-gedrehten Garnen**
Open-end spinning device for making S or Z twist yarns
Métier à filer à bout ouvert pour fabriquer des fils à torsion S ou Z

(30) Priorität: 18.12.1997 DE 19756476; 10.09.1998 DE 19841406
(43) Veröffentlichungstag der Anmeldung: 30.06.1999
(73) Patentinhaber: W. SCHLAFHORST AG & CO., 41061 Mönchengladbach (DE)
(72) Erfinder: Winzen, Lothar, 52525 Heinsberg (DE); Schröder, Hans-Josef, 41179 Mönchengladbach (DE); Radermacher, Wolfgang, 41844 Wegberg (DE)

(56) Entgegenhaltungen:
- EP-A- 0 718 423
- DE-A- 19 603 730
- GB-A- 1 202 056
- US-A- 4 149 365

## Beschreibung

Die Erfindung betrifft eine Offenend-Spinnvorrichtung gemäß dem Oberbegriff des Anspruches 1.

Offenend-Spinnvorrichtungen mit Spinnrotoren, die in Stützscheibenlagerungen umlaufen, sind seit langem Stand der Technik und beispielsweise in der DE 32 05 566 A1 beschrieben. Diese bekannten Spinnrotoren verfügen üblicherweise über einen Rotorschaft, der im Lagerzwickel zweier Stützscheibenpaare gelagert ist sowie eine Rotortasse, die, endseitig am Rotorschaft festgelegt, mit hoher Drehzahl in einem unterdruckbeaufschlagten Rotorgehäuse umläuft. Der Rotorschaft weist an seinem der Spinntasse gegenüberliegenden Ende außerdem eine Lagerkomponente eines mechanischen Axiallagers auf. Der Antrieb derartiger Spinnrotoren erfolgt in der Regel über einen maschinenlangen Tangentialriemen.

Bei den bekannten Stützscheibenlagerungen sind die Achsen der Stützscheibenpaare bezüglich der Rotorachse etwas geschränkt angeordnet, so daß während des Spinnbetriebes eine axiale Kraftkomponente auf den Rotorschaft wirkt, die den Rotorschaft in sicherer Anlage am rotorschaftendseitig angeordneten Axiallager hält.

Das bedeutet, die Schränkung der Achsen der Stützscheibenpaare führt in Verbindung mit einer vorgegebenen Laufrichtung des Tangentialriemens am Rotorschaft zu einer axialen, in Richtung Axiallager wirksamen Kraftkomponente.
Eine Laufrichtungsänderung des Tangentialriemens ist bei einer solchen Einrichtung nicht möglich, da dies auch zu einer Richtungsumkehrung der axialen Kraftkomponente am Rotorschaft führen würde, mit der Folge, daß der Rotorschaft außer Kontakt mit seinem endseitigen Axiallager kommen und der Spinnrotor am Deckel des Rotorgehäuses anlaufen würde.

Die nachveröffentlichte DE 197 29 191 A1 beschreibt eine Offenend-Spinnvorrichtung, bei der der Spinnrotor mit seinem Rotorschaft im Lagerzwickel einer axialschubfreien Stützscheibenlagerung gelagert ist. Bei dieser Stützscheibenlagerung sind die Achsen der Stützscheibenpaare parallel zur Rotorachse angeordnet.
Die axiale Positionierung des Spinnrotors bzw. des Rotorschaftes im Lagerzwickel der Stützscheibenlagerung erfolgt über ein rotorschaftendseitig wirksames Magnetlager. Da solche axialschubfreie Stützscheibenlagerungen bezüglich der Antriebsrichtung des Spinnrotors frei sind, ist mit einer derartigen Einrichtung ein Betrieb des Spinnrotors sowohl im Uhrzeigersinn als auch im Gegenuhrzeigersinn möglich.

Durch die ebenfalls nachveröffentlichte DE 198 19 767.5 ist außerdem eine Offenend-Spinnvorrichtung bekannt, bei der der Spinnrotor innerhalb eines Lagergehäuses berührungslos gelagert ist. Das heißt, dieser bekannte Spinnrotor läuft axialschubfrei in Elektromagnetlagern um.

Des weiteren ist, beispielsweise durch die DE 196 03 730 A1, eine Offenend-Spinnvorrichtung bekannt, die im Bereich eines das Rotorgehäuse verschließenden Deckels, der sogenannten Kanalplatte, ein auswechselbares Adapterstück aufweist. Ein solcher in einer Aufnahme der Kanalplatte auswechselbar festlegbarer Kanalplattenadapter ermöglicht es auf einfache und problemlose Weise, im Bedarfsfall schnell auf die jeweiligen spinntechnologischen Verhältnisse zu reagieren.

Das heißt, wenn sich, zum Beispiel im Zuge eines Partiewechsel, der oft mit einem Spinnrotorwechsel verbunden ist, die geometrischen Verhältnisse in der Spinnvorrichtung geändert haben, können durch einfachen Austausch des Kanalplattenadapters wieder optimale Spinnbedingungen geschaffen werden.

Schließlich ist in der DE-AS 16 85 905 eine Offenend-Spinnvorrichtung zur Herstellung von S-gedrehtem oder Z-gedrehtem Garn beschrieben. Das heißt, der direkt gelagerte Spinnrotor dieser OE-Spinnvorrichtung ist wahlweise im Uhrzeigersinn oder im Gegenuhrzeigersinn antreibbar.
Das Rotorgehäuse dieser bekannten Spinnvorrichtung ist durch ein Deckelelement verschließbar, das zwei separate Faserleitkanäle aufweist. Die beiden Faserleitkanäle können, je nach Drehrichtung des Spinnrotors, wahlweise an den Ausgang eines Streckwerkes angeschlossen werden.

Diese bekannte Vorrichtung weist allerdings eine Reihe von Nachteilen auf , die verhinderten, daß sich diese Vorrichtung in der Praxis durchsetzen konnte.
Mit direkt gelagerten Spinnrotoren sind beispielsweise auf Dauer nicht die von modernen Textilmaschinen geforderten hohen Drehzahlen erreichbar.
Außerdem muß bei dieser bekannten Vorrichtung, wenn sich beispielsweise die Spinngeometrie in der Spinnvorrichtung aufgrund eines Wechsels des Spinnrotors geändert hat, das gesamte Deckelelement ausgetauscht werden. Die Lagerhaltung solcher komplett auszutauschenden Deckelelemente ist entsprechend kostspielig. Des weiteren ist bei Deckelelementen mit zwei Faserleitkanälen nachteilig, daß durch den jeweils nicht an das Streckwerk angeschlossenen Faserleitkanal ständig Falschluft in die Spinnvorrichtung eingesaugt wird, was zu einem deutlich erhöhten Energieverbrauch dieser Einrichtungen führt.

Ausgehend vom vorgenannten Stand der Technik liegt der Erfindung die Aufgabe zugrunde, eine leistungsfähige Offenend-Spinnvorrichtung zu schaffen, mit deren Spinnrotor wahlweise sowohl Z-gedrehtes als auch S-gedrehtes Garn hergestellt werden kann.

Diese Aufgabe wird erfindungsgemäß durch eine Vorrichtung gelöst, wie sie im Anspruch 1 beschrieben ist.

Vorteilhafte Ausgestaltungen der Erfindung sind Gegenstand der Unteransprüche.

Die erfindungsgemäße Vorrichtung hat den Vorteil, daß aufgrund der axialschubfreien Lagerung des Spinnrotors dauerhaft ein sicherer Betrieb bei höchsten Drehzahlen sowohl im Uhrzeigersinn als auch im Gegenuhrzeigersinn möglich ist. Außerdem gewährleistet der auswechselbare, auf die jeweilige Drehrichtung des Spinnrotors abgestimmte Kanalplattenadapter auf einfache Weise eine optimale Anpassung der geometrischen Verhältnisse der Offenend-Spinnvorrichtung.
Das heißt, auf der erfindungsgemäßen Einrichtung kann ohne größere Umbaumaßnahmen wahlweise Z-gedrehtes oder S-gedrehtes Garn gefertigt werden. Es ist in diesem Zusammenhang lediglich erforderlich die Antriebsrichtung des Spinnrotors vorzugeben sowie den für die Drehrichtung geeigneten Kanalplattenadapter einzusetzen.

Die Spinnmaschine kann dabei für beide Garndrehrichtungen mit voller Betriebsgeschwindigkeit laufen, was sich insbesondere auf den Maschinenwirkungsgrad positiv auswirkt.

Die auswechselbaren Kanalplattenadapter sind jeweils für eine bestimmte Spinnrotordrehrichtung konzipiert. Das heißt, der innerhalb des Kanalplattenadapters verlaufende Mündungsbereich des Faserleitkanales ist so angeordnet, daß die in der Faserbandauflöseeinrichtung ausgelösten Einzelfasern jeweils unter einem spitzen Winkel auf die Fasergleitfläche des entweder im Uhrzeigersinn oder im Gegenuhrzeigersinn rotierenden Spinnmittels aufgespeist werden.

Als besonders vorteilhaft hat es sich erwiesen, wenn bei der Herstellung von Z-gedrehten Garnen der im Kanalplattenadapter verlaufende Mündungsbereich des Faserleitkanales, wie im Anspruch 2 beschrieben, im Einbauzustand des Kanalplattenadapters unter einem Winkel < 25°, vorzugsweise unter einem Winkel ca. 10°, an den Mittelbereich des Faserleitkanals angeschlossen ist.

Bei der Herstellung von S-gedrehten Garnen sollte ein Kanalplattenadapter Verwendung finden, bei dem der Mündungsbereich des Faserleitkanales unter einem Winkel größer als 40°, vorzugsweise etwa 45°, an den Mittelbereich des Faserleitkanales angeschlossen ist (Anspr.3).

Die vorbeschriebene Ausbildung der Kanalplattenadapter gewährleistet, daß sowohl bei der Herstellung von Z-gedrehten Garnen als auch bei der Herstellung von S-gedrehten Garnen die Einzelfasern in nahezu paralleler und weitestgehend gestreckter Ausrichtung auf die Fasergleitfläche des in entsprechender Drehrichtung rotierenden Spinnrotors aufgespeist werden.

In vorteilhafter Ausführungsform ist der Spinnrotor, wie im Anspruch 4 ausgeführt, mit seinem Rotorschaft im Lagerzwickel einer Stützscheibenlagerung abgestützt, deren Stützscheibenpaare parallel angeordnete Achsen aufweisen, so daß der Spinnrotor axialschubfrei gelagert ist. Die axiale Fixierung des Spinnrotors erfolgt dabei vorzugsweise über ein verschleißfreies, magnetisches Axiallager.

In einer alternativen Ausführungsform ist der bezüglich des Lagergehäuses galvanisch getrennt gelagerte Spinnrotor sowohl radial als auch axial in einer definiert bestrombaren Magnetlageranordnung abgestützt und über eine Elektromotor einzelmotorisch angetrieben. Eine solche in den Ansprüchen 5 bzw. 6 beschriebene Ausbildung ermöglicht höchste Rotordrehzahlen, bei nahezu verschleißfreier Lagerung.

Weitere Einzelheiten der Erfindung sind einem nachfolgend anhand der Zeichnungen dargestellten Ausführungsbeispiel entnehmbar.

Es zeigt:
- Fig. 1: in Seitenansicht eine Offenend-Spinnvorrichtung mit einem axialschubfrei gelagerten, magnetisch positionierten Spinnrotor, teilweise im Schnitt,
- Fig. 2: eine Faserbandauflöseeinrichtung einer Offenend-Spinnvorrichtung mit einem Kanalplattenadapter zur Herstellung von Z-gedrehtem Garn, gemäß Blickrichtung A der Figur 1,
- Fig. 2a: Z-gedrehtes Garn,
- Fig. 3: eine Faserbandauflöseeinrichtung einer Offenend-Spinnvorrichtung mit einem Kanalplattenadapter zur Herstellung von S-gedrehtem Garn, gemäß Blickrichtung A der Figur 1,
- Fig. 3a: S-gedrehtes Garn,
- Fig. 4: in Seiten ansicht eine schematische Darstellung einer Offenend-Spinnvorrichtung mit einer berührungslos arbeitenden, magnetischen Spinnrotorlagerung, teilweise im Schnitt,
- Fig. 5: die Magnetlagerung gemäß Fig.4 in einem größeren Maßstab.

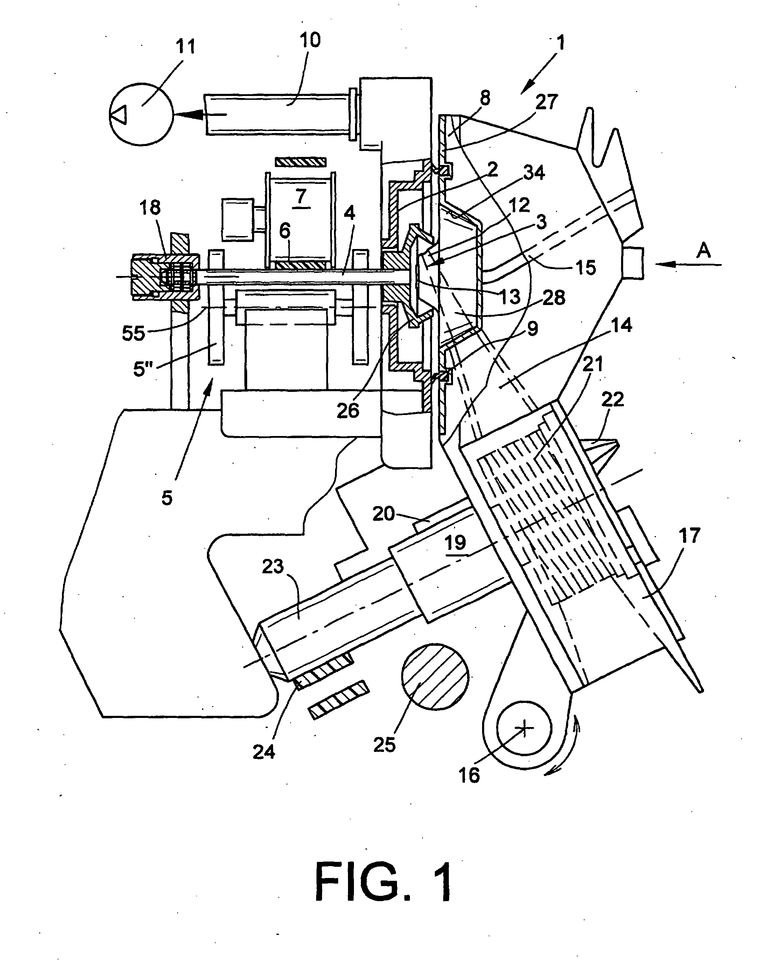

Die in Figur 1 dargestellte Offenend-Spinnvorrichtung trägt insgesamt die Bezugszahl 1.

Die Spinnvorrichtung 1 verfügt, wie bekannt, über ein Rotorgehäuse 2, in dem die Spinntasse 26 eines Spinnrotors 3 mit hoher Drehzahl umläuft. Der Spinnrotor 3 ist dabei mit seinem Rotorschaft 4 im Lagerzwickel einer axialschubfreien Stützscheibenlagerung 5 abgestützt. Der Antrieb des Spinnrotors 3 erfolgt, wie üblich, über einen maschinenlangen Tangentialriemen 6, der durch eine Andrückrolle 7 an den Rotorschaft 4 angestellt wird. Der Tangentialriemen 6 ist über einen (nicht dargestellten) reversierbaren, frequenzgesteuerten Elektromotor beaufschlagt. Die axiale Positionierung des Rotorschaftes 4 im Lagerzwickel der axialschubfreien Stützscheibenlagerung 5 erfolgt über ein permanentmagnetisches Axiallager 18.

Wie üblich, ist das an sich nach vorne hin offene Rotorgehäuse 2 während des Spinnbetriebes durch ein schwenkbar gelagertes Deckelelement 8 verschlossen. Das Deckelelement 8 weist zu diesem Zweck eine Kanalplatte 27 mit einer Dichtung 9 auf. Das Rotorgehäuse 2 ist außerdem über eine entsprechende Absaugleitung 10 an eine Unterdruckquelle 11 angeschlossen, die den im Rotorgehäuse 2 notwendigen Spinnunterdruck erzeugt.

In einer Aufnahme 34 der Kanalplatte 27 ist ein Kanalplattenadapter 12ₛ beziehungsweise 12_{z} angeordnet, der jeweils die Fadenabzugsdüse 13 sowie den Mündungsbereich 28ₛ beziehungsweise 28_{z} des Faserleitkanales 14 aufweist. An die Fadenabzugsdüse 13 schließt sich ein Fadenabzugsröhrchen 15 an. Außerdem ist am Deckelelement 8, das um eine Schwenkachse 16 begrenzt drehbar gelagert ist, ein Auflösewalzengehäuse 17 festgelegt. Das Deckelelement 8 besitzt des weiteren rückwärtige Lagerkonsolen 19, 20 zur Lagerung einer Auflösewalze 21 beziehungsweise eines Faserbandeinzugszylinders 22. Die Auflösewalze 21 wird dabei im Bereich ihres Wirtels 23 durch einen umlaufenden, maschinenlangen Tangentialriemen 24 angetrieben, während der (nicht dargestellte) Antrieb des Faserbandeinzugszylinders 22 vorzugsweise über eine Schneckengetriebeanordnung erfolgt, die auf eine maschinenlange Antriebswelle 25 geschaltet ist.

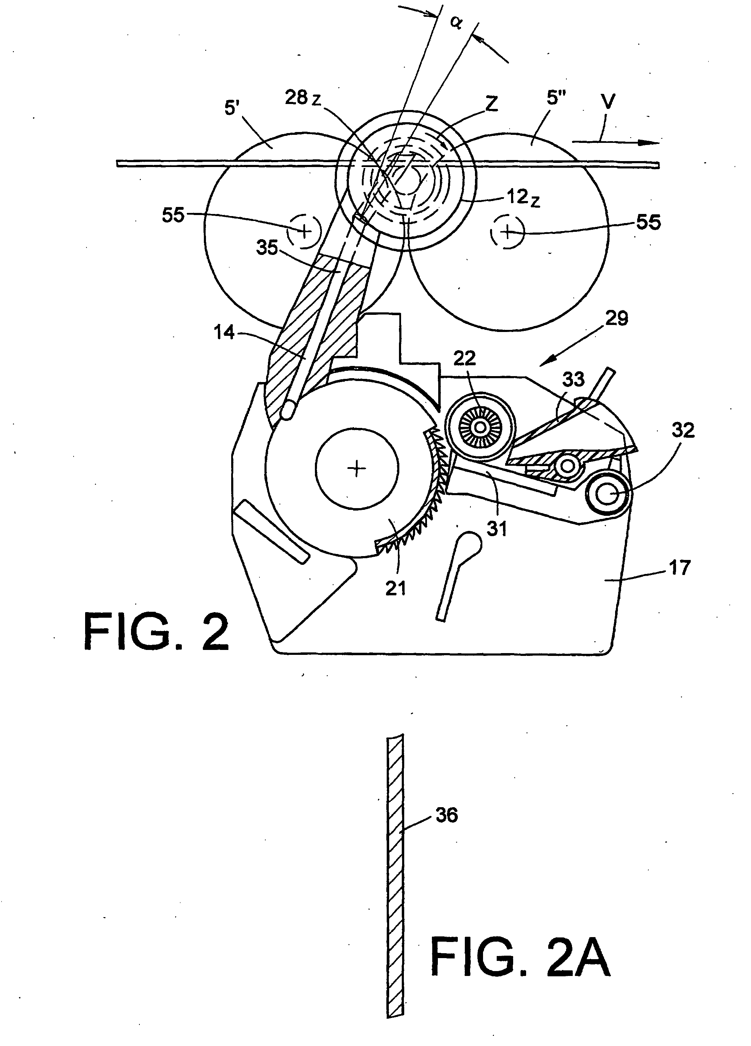

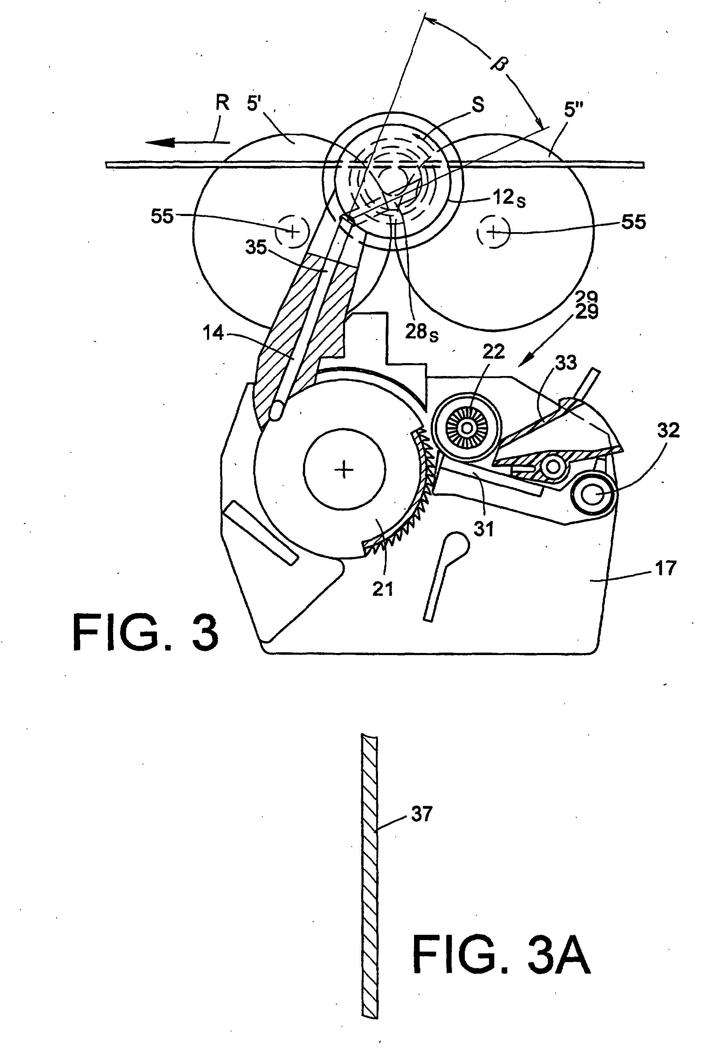

Die Figuren 2 und 3 zeigen in Vorderansicht eine an sich bekannte Faserbandauflöseeinrichtung 29, mit einem Auflösewalzengehäuse 17, einer Auflösewalze 21 sowie einer Faserbandzuführung. Die Faderbandzuführung besteht dabei aus einem Faserbandeinzugszylinder 22, an den eine Speisemulde 31, die um eine Schwenkachse 32 drehbar gelagert ist, anstellbar ist. An der Speisemulde 31 ist außerdem, wie üblich, ein Faserbandverdichter 33 festgelegt.

Das Auflösewalzengehäuse 17 ist über einen Faserleitkanal 14 mit einer in den Figuren 2 und 3 aus Gründen der besseren Übersichtlichkeit nicht dargestellten Kanalplatte 27 verbunden. Das heißt, der Mittelbereich 35 des Faserleitkanals 14 geht, jeweils unter Bildung eines Winkels α bzw. β in den Mündungsbereich 28_{z} bzw 28ₛ des Faserleitkanals über. Der Mündungsbereich 28_{z} bzw 28ₛ verläuft dabei innerhalb des Kanalplattenadapters 12_{z} bzw. 12_{s,} der in einer (nicht dargestellten) Aufnahme 34 der Kanalplatte 27 angeordnet ist.

Zur Herstellung von Z- oder S-gedrehtem Garnen muß lediglich die gewünschte Antriebsrichtung des Tangentialriemens 6 und damit die Drehrichtung Z oder S des Spinnrotors 3 eingestellt sowie der entsprechende Kanalplattenadapter 12_{z} bzw. 12ₛ in die Aufnahme 34 der Kanalplatte 27 eingelegt werden.

Die Figur 2 zeigt eine Offenend-Spinnvorrichtung zum Herstellen des in Figur 2a dargestellten Z-gedrehten Garnes 36. Das bedeutet, der Tangentialriemen 6 wird von einem (nicht dargestellten) reversierbaren Elektromotor in Richtung V angetrieben, so daß der Spinnrotor 3 im Uhrzeigersinn Z rotiert.

Als Kanalplattenadapter findet in diesem Fall die Ausführung 12_{z} Verwendung, die einen Mündungsbereich 28_{z} des Faserleitkanales 14 aufweist, der im Einbauzustand des Kanalplattenadapters 12_{z} unter einem Winkel α < 25°, vorzugsweise etwa 10°, an den Mittelbereich 35 des Faserleitkanales 14 angeschlossen ist.

Die gewählte Drehrichtung Z des Spinnrotors 3, das heißt, der Spinnrotorumlauf im Uhrzeigersinn sowie die spezielle Ausrichtung des Mündungsbereiches 28_{z} des Faserleitkanales 12_{z} führen dabei zur Produktion von sogenanntem Z-gedrehtem Garn 36, das in Figur 2A in einem vergrößertem Maßstab dargestellt ist.

Die Figur 3 zeigt eine geringfügig modifizierte Offenend-Spinnvorrichtung zur Produktion von sogenanntem S-gedrehtem Garn 37.

Wie in Figur 3 angedeutet, wird der Tangentialriemen 6 in diesem Fall in Richtung R angetrieben, so daß der Spinnrotor 3 im Gegenuhrzeigersinn S dreht.

In die Aufnahme 34 der Kanalplatte 27 ist jetzt ein Kanalplattenadapter 12ₛ eingesetzt, das heißt, ein Kanalplattenadapter, der den Mündungsbereich 28ₛ des Faserleitkanales 14 aufweist. Der Mündungsbereich 28ₛ ist im Einbauzustand des Kanalplattenadapters 12ₛ unter einem Winkel β > 40°, vorzugsweise etwa 45°, an den Mittelbereich 35 des Faserleitkanales 14 angeschlossen.

Auch bei einer solchen Anordnung ist sichergestellt, daß die in der Faserbandauflöseeinrichtung 29 vereinzelten Fasern vorschriftsmäßig auf die Fasergleitfläche des Spinnrotors 3 aufgespeist werden.

Das bei diesem Produktionsprozeß entstehende sogenannte S-gedrehte Garn 37 ist in Figur 3A , ebenfalls im vergrößerten Maßstab, dargestellt.

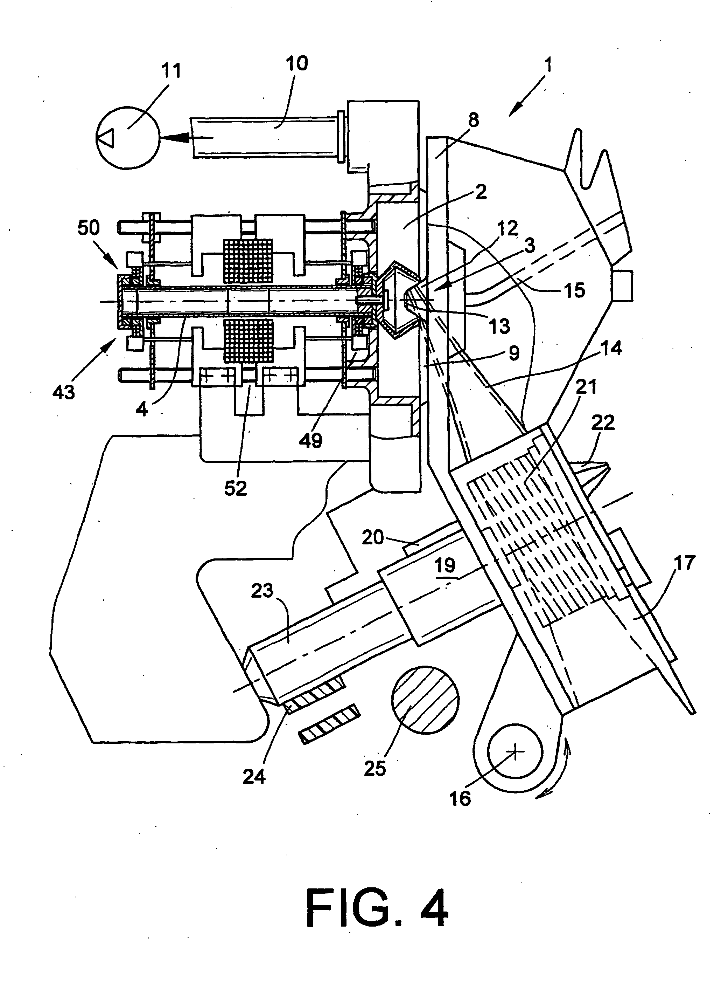

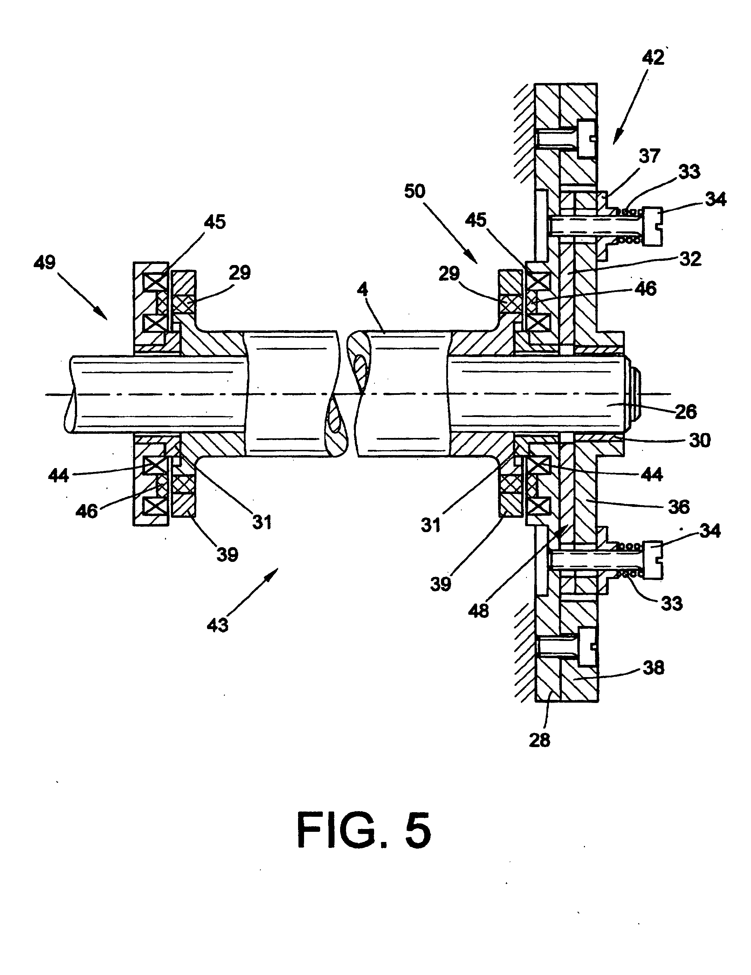

Die in Fig.4 dargestellte Offenend-Spinnvorrichtung 1 entspricht im wesentlichen der OE-Spinnvorichtung gemäß Fig.1 und unterscheidet sich von dieser lediglich in der Art der Spinnrotorlagerung.
Das heißt, anstelle einer an sich bewährten Stützscheibenlagerung ist eine Magnetlageranordnung 43 vorgesehen.
Wie in Fig.4 angedeutet, weist die Magnetlageranordnung 43 eine rotorschaftendseitige Lagerkomponente 50 und eine spinntassenseitige Lagerkomponente 49 auf. Der Antrieb des sowohl radial als auch axial getrennt gelagerten Spinnrotors 3 erfolgt dabei über einen elektromotorischen Einzelantrieb 52. Insbesondere aus Fig.5 ist ersichtlich, daß die Lagerkomponenten 49, 50 im wesentlichen jeweils aus einem ringförmigen Statorlagermagneten 46, der von definiert bestrombaren Spulen 44, 45 eingefaßt wird, und einem Rotorlagermagnet 29 bestehen. Der ebenfalls ringförmige Rotorlagermagnet 29 ist dabei durch eine Magnetbandage 39 gesichert.

Im Bereich der rotorschaftseitigen Lagerkomponente 50 ist in bevorzugter Ausführungsform außerdem eine Schwingungsdämpfungseinrichtung 42 angeordnet. Diese Dämpfungseinrichtung 42 weist, wie in Fig.5 angedeutet, eine mechanische Reibvorrichtung 48 auf, die im wesentlichen aus einem Lagerschild 28, einer Zwischenplatte 32 sowie einer bewegliche Reibplatte 36 besteht.
Die Reibplatte 36 ist dabei über Schrauben 34, Federn 33 und Druckplättchen 37 reibschlüssig an das Lagerschild 28 angeschlossen. In einer Mittelbohrung 6 der beweglichen Reibplatte 36 ist außerdem eine Gleitlagerbuchse 30 festgelegt.

In entsprechenden Ausnehmungen des stationären Lagerschildes 28 sind der Permanentmagnetring 46 sowie die konzentrisch angeordneten, bestrombaren Ringspulen 44, 45 der Magnetlagerkomponente 50 positioniert. Dem statorseitigen Permanentmagnetring 46 steht in geringem Abstand der rotorseitige Permantmagnetlagerring 29 gegenüber, der in einen rotationssymmetrischen Bund des Rotorschaftes 4 integriert ist.

Des weiteren ist in den stationären Lagerschild 28 ein mit 31 bezeichnetes Begrenzungslager und in die bewegliche Reibplatte 36 eine Gleitlagerbuchse 30 eingelassen.

## Patentansprüche

1. Offenend-Spinnvorrichtung mit einem axialschubfrei gelagerten Spinnrotor, dessen Drehrichtung wahlweise einstellbar ist und dessen Rotortasse mit hoher Drehzahl in einem unterdruckbeaufschlagten, durch eine Kanalplatte verschließbaren Rotorgehäuse umläuft,
**dadurch gekennzeichnet,**
**daß** die Kanalplatte (27) eine Aufnahme (34) aufweist, in der ein auf die Drehrichtung des Spinnrotors (3) abgestimmter Kanalplattenadapter (12ₛ oder 12_{z}) auswechselbar festlegbar ist, wobei der
Kanalplattenadapter (12ₛ beziehungsweise 12_{z}) jeweils einen auf die Drehrichtung (Uhrzeigersinn Z beziehungweise Gegenuhrzeigersinn S) des Spinnrotors (3) abgestimmten Mündungsbereich (28ₛ beziehungweise 28_{z}) eines Faserleitkanales (14) aufweist.

2. Offenend-Spinnvorrichtung nach Anspruch 1, **dadurch gekennzeichnet, daß** der Mündungsbereich (28_{z}) des Kanalplattenadapters (12_{z}) im Einbauzustand des Kanalplattenadapters unter einem Winkel α < 25°, vorzugsweise α = 10°, an den Mittelbereich (35) des Faserleitkanales (14) angeschlossen ist.

3. Offenend-Spinnvorrichtung nach Anspruch 1, **dadurch gekennzeichnet, daß** der Mündungsbereich (28ₛ) des Kanalplattenadapters (12ₛ) im Einbauzustand des Kanalplattenadapters unter einem Winkel β > 40°, vorzugsweise etwa 45°, an den Mittelbereich (35) des Faserleitkanales (14) angeschlossen ist.

4. Offenend-Spinnvorrichtung nach einem der vorherigen Ansprüche, **dadurch gekennzeichnet,**
**daß** der Spinnrotor (3) mit seinem Rotorschaft (4) im Lagerzwickel einer Stützscheibenlagerung (5) abgestützt ist,
**daß** die Stützscheibenlagerung (5) Stützscheibenpaare (5', 5'') aufweist, deren Rotatationsachsen (55) parallel angeordnet sind und
**daß** der Spinnrotor (3) auf der Stützscheibenlagerung (5) durch ein magnetisches Axiallager (18) axial fixiert ist.

5. Offenend-Spinnvorrichtung nach einem der vorherigen Ansprüche, **dadurch gekennzeichnet, daß** der Spinnrotor (3) in einer Magnetlageranordnung (43), radial und axial positioniert, abgestützt ist.

6. Offenend-Spinnvorrichtung nach Anspruch 5, **dadurch gekennzeichnet, daß** der Spinnrotor (3) durch einen elektromotorischen Einzelantrieb (52) beaufschlagbar ist.

## Claims

1. Open-end spinning device comprising a spinning rotor supported free of axial thrust, the direction of rotation of which is selectively adjustable and the rotor cup of which rotates at high speed in a rotor housing which can be closed by a conduit plate and is subject to a vacuum, **characterised in that** the conduit plate (27) has a receptacle (34) in which a conduit plate adapter (12ₛ or 12_{z}) coordinated with the direction of rotation of the spinning rotor (3) can be replaceably fixed, the conduit plate adapter (12ₛ or 12_{z}) having a respective mouth region (28ₛ or 28_{z}) of a fibre guide conduit (14) coordinated with the direction of rotation (clockwise Z or anti-clockwise S) of the spinning rotor (3).

2. Open-end spinning device according to claim 1, **characterised in that** the mouth region (28_{z}) of the conduit plate adapter (12_{z}) is connected in the fitted state of the conduit plate adapter at an angle of α < 25°, preferably α = 10°, to the middle region (35) of the fibre guide conduit (14).

3. Open-end spinning device according to claim 1, **characterised in that** the mouth region (28ₛ) of the conduit plate adapter (12ₛ) is connected in the fitted state of the conduit plate adapter at an angle of β > 40°, preferably about 45°, to the middle region of the fibre guide conduit (14).

4. Open-end spinning device according to any of the preceding claims, **characterised in that** the spinning rotor (3) with its rotor shaft (4) is supported in the bearing nip of a support disk bearing (5), **in that** the support disk bearing (5) has support disk pairs (5', 5"), of which the axes of rotation (55) are arranged in parallel and **in that** the spinning rotor (3) is axially fixed on the support disk bearing (5) by a magnetic axial bearing (18).

5. Open-end spinning device according to any of the preceding claims, **characterised in that** the spinning rotor (3) is supported in a magnet-bearing arrangement (43) so as to be radially and axially positioned.

6. Open-end spinning device according to claim 5, **characterised in that** the spinning rotor (3) can be loaded by a electromotive individual drive (52).

## Revendications

1. Métier à filer à bout ouvert doté d'un rotor de filage sans poussée axiale dont le sens de rotation peut être réglé librement et dont le pot de filage tourne à grande vitesse dans un carter de rotor où règne une dépression et qui peut être fermé par une plaque à passage, **caractérisé en ce que** la plaque à passage (27) présente un logement (34) dans lequel un adaptateur (12s ou 12z) de plaque à passage conçu pour le sens de rotation du rotor de filage (3) peut être immobilisé de façon amovible, sachant que l'adaptateur de plaque à passage (respectivement 12s et 12z) présente une embouchure (respectivement 28s et 28z) d'un passage (14) guidant les fibres, conçue pour le sens de rotation (sens des aiguilles d'une montre Z ou sens inverse des aiguilles d'une montre S) du rotor de filage (3).

2. Métier à filer à bout ouvert selon la revendication 1, **caractérisé en ce que**, lorsque l'adaptateur de plaque à passage est monté, l'embouchure (28z) dudit adaptateur (12z) de plaque à passage est raccordée à la zone centrale (35) du passage (14) guidant les fibres en formant un angle α < 25°, de préférence α = 10°.

3. Métier à filer à bout ouvert selon la revendication 1, **caractérisé en ce que**, lorsque l'adaptateur de plaque à passage est monté, l'embouchure (28s) dudit adaptateur (12s) de plaque à passage est raccordée à la zone centrale (35) du passage (14) guidant les fibres en formant un angle β > 40°, de préférence d'environ 45°.

4. Métier à filer à bout ouvert selon l'une des revendications précédentes, **caractérisé en ce que** le rotor de filage (3) prend appui avec sa tige (4) dans le coin formé par un dispositif de support à disques d'appui (5), **en ce que** le dispositif de support à disques d'appui (5) présente des paires de disques d'appui (5', 5") dont les axes de rotation (55) sont parallèles entre eux, et **en ce que** le rotor de filage (3) est fixé sur le dispositif de support à disques d'appui (5) dans la direction axiale par un palier axial magnétique (18).

5. Métier à filer à bout ouvert selon l'une des revendications précédentes, **caractérisé en ce que** le rotor de filage (3) prend appui dans un palier magnétique (43) en étant positionné radialement et axialement.

6. Métier à filer à bout ouvert selon la revendication 5, **caractérisé en ce que** le rotor de filage (3) peut être actionné par une commande électromécanique individuelle (52).
